# EUROPEAN PATENT APPLICATION

(11) **EP 3 706 277 A1**
(43) Date of publication of application: **09.09.2020**
(21) Application number: 18872110.4
(22) Date of filing: 22.06.2018
(51) Int. Cl.: H02J 7/00

(54) **CURRENT EQUALIZATION CIRCUIT AND METHOD BASED ON DDQ MAGNETIC STRUCTURE**

(30) Priority: 01.11.2017 CN 201711057447
(71) Applicant: NIO Nextev Limited, Central, Hong Kong (HK)
(72) Inventor: CHEN, Xiaoyu, Shanghai 201804 (CN); TAN, Guangzhi, Shanghai 201804 (CN)
(74) Representative: Vossius & Partner Patentanwälte Rechtsanwälte mbB
(86) International application number: PCT/CN2018/092383
(87) International publication number: WO 2019/085517

(57) **Abstract**

The present invention relates to the technical field of wireless charging, and in particular to a current equalization circuit and method based on a DDQ magnetic structure. The current equalization circuit includes a first current equalization circuit associated with a DD coil and a second current equalization circuit associated with a Q coil; and the first current equalization circuit and the second current equalization circuit maintain the deviation of two groups of output current within a set range by controlling respective output current values. The present invention solves the problem of uneven output current of the DDQ magnetic structure, and can improve the charging efficiency and the charging power; and on the basis of the wireless charging of a vehicle, the present invention can improve the power transmission magnitude and efficiency in the presence of position deviation.

## Description

### Field of the Invention

The present invention relates to the technical field of wireless charging, and in particular to a current equalization circuit and method based on a DDQ magnetic structure.

### Background of the Invention

A traditional wireless charging system relates to the power electronics technology, the control technology and the high-frequency magnetic technology, wherein the performance of a magnetic coupling structure is a key factor affecting the wireless charging. At present, there are many types of magnetic coupling structures, but basically all focus on how to improve the coupling coefficient and reduce the amount of copper used. Common magnetic coupling structures are toroidal (CP), spiral and figure 8-shaped, and the figure 8-shape is also called a DD coil.

The MIT brings the wireless energy transmission technology to the public at first, but it does not perform too many in-depth researches, and the researches always remain on CP and DD coils, although these two coils can also achieve high-efficiency transmission under ideal conditions, but in reality, due to the position shift caused by parking, it is difficult for these two coils to ensure sufficient transmission power, and it is necessary to increase the coil size, thereby increasing the cost.

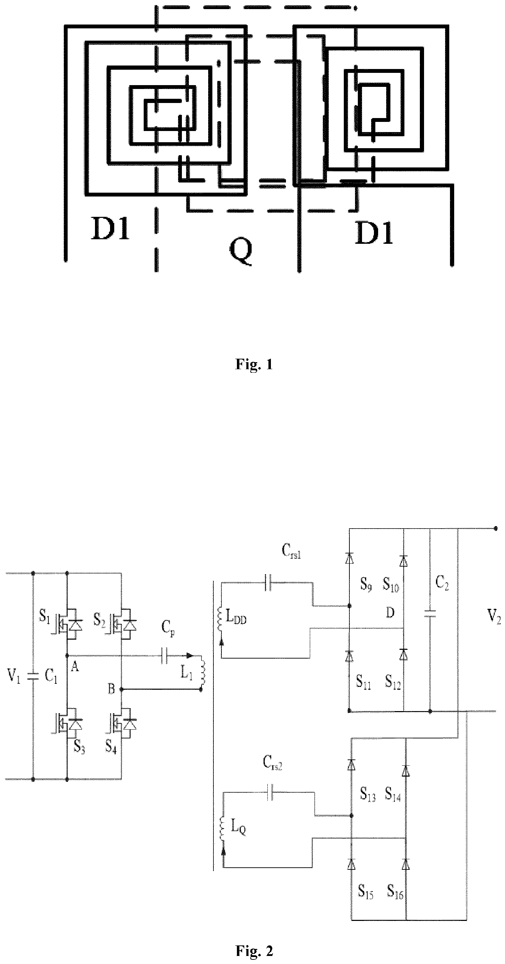

The University of Auckland in New Zealand adds a coil Q orthogonal to the DD coil on the basis of the DD coil. The structure is shown in Fig. 1, the coils produced do not affect each other, the two coils output separately, and the output voltages are output in parallel through two rectifier bridges.

Taking a typical DDQ magnetic structure as an example, as shown in Fig. 2, an original converter is modulated into a high-frequency magnetic field by CP and L1, and is captured by the DD coil and the Q coil. In the case of no deviation, the DD coil receives a magnetic field source and converts it to a DC voltage through a rectifier circuit for output. As the deviation increases, the magnetic field energy received by the DD coil decreases, the magnetic field energy received by the Q coil increases accordingly, and the voltages generated by the two coils through the rectifier circuit are superimposed on each other to jointly provide electric energy for the load.

Although the circuit of this architecture can solve the problem of reduced transmission power and efficiency caused by position deviation, the conventional rectifier circuit cannot solve the problem of uneven output current. Since the the magnetic field energy received by the DD coil and the Q coil is inconsistent, it is very easy to cause the output current of a certain branch to be uneven, or even no output, resulting in reduced efficiency and poor EMI characteristics, and especially in the case of wireless charging of electric vehicles, this unfavorable performance is more prominent.

### Summary of the Invention

The purpose of the present invention is to provide a current equalization circuit and method based on a DDQ magnetic structure to solve the problem of uneven output current of the DDQ magnetic structure.

The purpose of the present invention is achieved by the following technical solutions.

The present invention provides a current equalization circuit based on a DDQ magnetic structure, including a first current equalization circuit associated with a DD coil and a second current equalization circuit associated with a Q coil, wherein the first current equalization circuit and the second current equalization circuit maintain the deviation of two groups of output current within a set range by controlling respective output current values.

Further, the first current equalization circuit is: a Boost circuit composed of a DD coil leakage inductor and a switch tube; the second current equalization circuit is: a Boost circuit composed of a Q coil leakage inductor and a switch tube; and the first current equalization circuit and the second current equalization circuit maintain the deviation of the two groups of output current within the set range by controlling the closing of the respective switch tubes.

Further, the first current equalization circuit is specifically configured to: when the current value of the DD coil leakage inductor is less than the current value of the Q coil leakage inductor, control the switch tube of the first current equalization circuit to close, so that the current value of the DD coil leakage inductor is increased; and the second current equalization circuit is specifically configured to: when the current value of the Q coil leakage inductor is less than the current value of the DD coil leakage inductor, control the switch tube of the second current equalization circuit to close, so that the current value of the Q coil leakage inductor is increased.

Further, the switch tube is MOS, IGBT, SIC or GAN.

Further, the first current equalization circuit and the second current equalization circuit are Buck circuits.

The present invention also provides a current equalization method based on a DDQ magnetic structure, including: controlling the current value of a DD coil leakage inductor through a first current equalization circuit, and controlling the current value of a Q coil leakage inductor through a second current equalization circuit, so that the deviation of two groups of output current is maintained within a set range.

Further, the first current equalization circuit is: a Boost circuit composed of the DD coil leakage inductor and a switch tube; the second current equalization circuit is: a Boost circuit composed of the Q coil leakage inductor and a switch tube; and the first current equalization circuit and the second current equalization circuit maintain the deviation of the two groups of output current within the set range by controlling the closing of the respective switch tubes.

Further, the first current equalization circuit is specifically configured to: when the current value of the DD coil leakage inductor is less than the current value of the Q coil leakage inductor, control the switch tube of the first current equalization circuit to close, so that the current value of the DD coil leakage inductor is increased; and the second current equalization circuit is specifically configured to: when the current value of the Q coil leakage inductor is less than the current value of the DD coil leakage inductor, control the switch tube of the second current equalization circuit to close, so that the current value of the Q coil leakage inductor is increased

Further, the switch tube is MOS, IGBT, SIC or GAN.

Further, the first current equalization circuit and the second current equalization circuit are Buck circuits.

The present invention further provides a controller, including a memory and a processor, wherein the memory stores a computer program, and the program can implement the steps of the foregoing method when executed by the processor.

The present invention further provides a computer-readable storage medium for storing a computer instruction, wherein the instruction implement the steps of the foregoing method when executed by a computer or a processor.

The present invention solves the problem of uneven output current of the DDQ magnetic structure through the current equalization circuit and method based on the DDQ magnetic structure, and can improve the charging efficiency and the charging power; and on the basis of the wireless charging of a vehicle, the present invention can improve the power transmission magnitude and efficiency in the presence of position deviation.

### Brief Description of the Drawings

Fig. 1 is a schematic diagram of a DDQ magnetic structure in the prior art;
Fig. 2 is a circuit diagram of the DDQ magnetic structure in the prior art;
Fig. 3 is a circuit diagram of an embodiment of a current equalization circuit based on a DDQ magnetic structure in the present invention;
Fig. 4 is a working flow diagram of the current equalization circuit based on the DDQ magnetic structure in the present invention.

### Detailed Description of the Embodiments

The present invention will be described in further detail below through specific embodiments and in combination with drawings.

The present embodiment provides a current equalization circuit based on a DDQ magnetic structure, including a first current equalization circuit associated with a DD coil and a second current equalization circuit associated with a Q coil, wherein the first current equalization circuit and the second current equalization circuit maintain the deviation of two groups of output current within a set range by controlling respective output current values.

The current equalization circuit specifically controls the current value of a DD coil leakage inductor through the first current equalization circuit, and controlling the current value of a Q coil leakage inductor through the second current equalization circuit, so that the deviation of two groups of output current is maintained within the set range. The first current equalization circuit and the second current equalization circuit may use Boost circuits (Boost circuits) or Buck circuits (Buck circuits).

The current equalization circuit solves the problem of uneven output current of the DDQ magnetic structure, and can improve the charging efficiency and charging power; and based on the wireless charging of a vehicle, the current equalization circuit can improve the power transmission magnitude and efficiency in the presence of position deviation.

When the Boost circuit is adopted, the first current equalization circuit uses the Boost circuit composed of the DD coil leakage inductor and a switch tube; the second current equalization circuit uses the Boost circuit composed of a Q coil leakage inductor and a switch tube; and the first current equalization circuit and the second current equalization circuit maintain the deviation of the two groups of output current within the set range by controlling the closing of the respective switch tubes.

The first current equalization circuit is specifically configured to: when the current value of the DD coil leakage inductor is less than the current value of the Q coil leakage inductor, control the switch tube of the first current equalization circuit to close, so that the current value of the DD coil leakage inductor is increased; and the second current equalization circuit is specifically configured to: when the current value of the Q coil leakage inductor is less than the current value of the DD coil leakage inductor, control the switch tube of the second current equalization circuit to close, so that the current value of the Q coil leakage inductor is increased

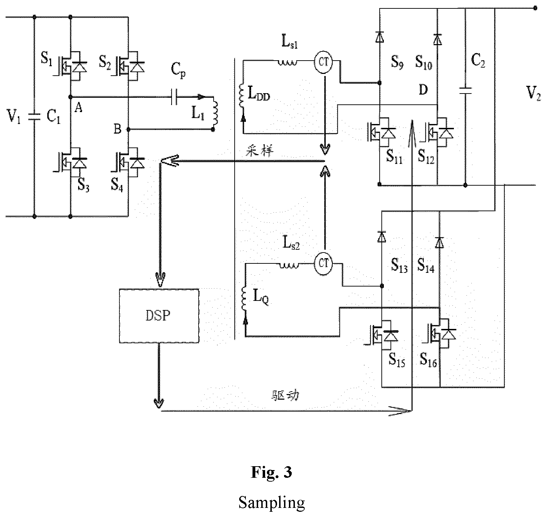

As shown in Fig. 3, the DDQ magnetic structure is to change an original rectifier diode (shown in Fig. 2) into a switch tube, such as S11, S12, S15 and S16. Taking the DD coil as an example, the leakage inductor Ls1 can respectively constitute a typical boost circuit with S9 and S11, as well as S10 and S12. Similarly, Ls2 respectively constitutes a Boost circuit with S15 and S13, as well as S16, and S14.

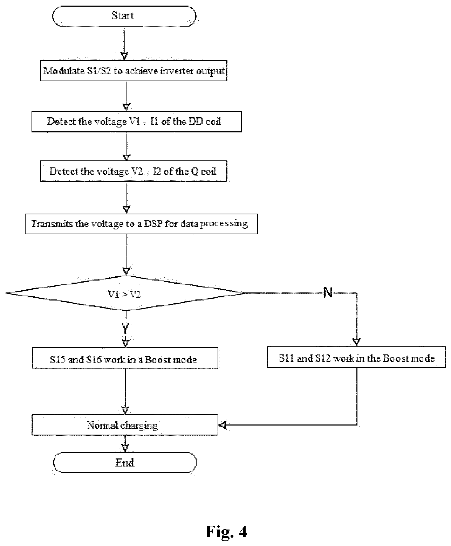

As shown in Fig. 4, the current equalization circuit controls the sampling of the current values (voltage values) of two coil branches, controls the Boost circuit based on the comparison result of the current values, and if the current I1> 12 (V1> V2), then controls S15 and S16 to close, at this time, the current 12 on the leakage inductor is increased, so that the output of the Q coil becomes larger; and

if the current I1 <12 (V1 <V2), the current equalization circuit controls the S11 and S12 to close, at this time, the current I1 on the leakage inductor is increased, so that the output of the DD coil becomes larger.

On the basis of the rectifier circuit of the traditional DDQ magnetic structure, the current equalization circuit replaces the diode with the switch tube, replaces a semi-controlled rectifier tube with a fully controlled switch tube, and controls the closing of the switch tube through appropriate logic control and parameter design, so that the deviation of the output current of the two groups of circuits can be maintained within a certain range, thereby improving the efficiency of energy transmission, controlling the stress of each branch power device within a certain range, and greatly improving the adaptability and availability of the DDQ magnetic structure.

It should be noted that the rectification mode described in this article can be ordinary diode rectification or synchronous rectification; the circuit described in this article is not limited to a full-bridge circuit, but a half-bridge circuit can also be implemented; and the switch tube in this article is not limited to an ordinary MOS tube, but IGBT, SIC and GAN can be used to combine switches.

The above descriptions are only the preferred embodiments of the present invention and are not intended to limit the present invention. For those skilled in the art, the present invention may have various modifications and changes. Any modifications, equivalent replacements, improvements and the like made within the spirit and principle of the present invention shall all fall within the protection scope of the present invention.

## Claims

1. A current equalization circuit based on a DDQ magnetic structure, comprising a first current equalization circuit associated with a DD coil and a second current equalization circuit associated with a Q coil, wherein,
the first current equalization circuit and the second current equalization circuit maintain the deviation of two groups of output current within a set range by controlling respective output current values.

2. The current equalization circuit based on the DDQ magnetic structure according to claim 1, wherein the first current equalization circuit is: a Boost circuit composed of a DD coil leakage inductor and a switch tube; the second current equalization circuit is: a Boost circuit composed of a Q coil leakage inductor and a switch tube; and
the first current equalization circuit and the second current equalization circuit maintain the deviation of the two groups of output current within the set range by controlling the closing of the respective switch tubes.

3. The current equalization circuit based on the DDQ magnetic structure according to claim 2, wherein the first current equalization circuit is specifically configured to: when the current value of the DD coil leakage inductor is less than the current value of the Q coil leakage inductor, control the switch tube of the first current equalization circuit to close, so that the current value of the DD coil leakage inductor is increased; and
the second current equalization circuit is specifically configured to: when the current value of the Q coil leakage inductor is less than the current value of the DD coil leakage inductor, control the switch tube of the second current equalization circuit to close, so that the current value of the Q coil leakage inductor is increased.

4. The current equalization circuit based on the DDQ magnetic structure according to claim 3, wherein the switch tube is MOS, IGBT, SIC or GAN.

5. The current equalization circuit based on the DDQ magnetic structure according to claim 1, wherein the first current equalization circuit and the second current equalization circuit are Buck circuits.

6. A current equalization method based on a DDQ magnetic structure, comprising:
controlling the current value of a DD coil leakage inductor through a first current equalization circuit, and controlling the current value of a Q coil leakage inductor through a second current equalization circuit, so that the deviation of two groups of output current is maintained within a set range.

7. The current equalization method based on the DDQ magnetic structure according to claim 6, wherein the first current equalization circuit is: a Boost circuit composed of the DD coil leakage inductor and a switch tube; the second current equalization circuit is: a Boost circuit composed of the Q coil leakage inductor and a switch tube; and
the first current equalization circuit and the second current equalization circuit maintain the deviation of the two groups of output current within the set range by controlling the closing of the respective switch tubes.

8. The current equalization method based on the DDQ magnetic structure according to claim 7, wherein the first current equalization circuit is specifically configured to: when the current value of the DD coil leakage inductor is less than the current value of the Q coil leakage inductor, control the switch tube of the first current equalization circuit to close, so that the current value of the DD coil leakage inductor is increased; and
the second current equalization circuit is specifically configured to: when the current value of the Q coil leakage inductor is less than the current value of the DD coil leakage inductor, control the switch tube of the second current equalization circuit to close, so that the current value of the Q coil leakage inductor is increased

9. The current equalization method based on the DDQ magnetic structure according to claim 8, wherein the switch tube is MOS, IGBT, SIC or GAN.

10. The current equalization method based on the DDQ magnetic structure according to claim 6, wherein the first current equalization circuit and the second current equalization circuit are Buck circuits.

11. A controller, comprising a memory and a processor, wherein the memory stores a computer program, and the program can implement the steps of the method according to any one of claims 6-10 when executed by the processor.

12. A computer-readable storage medium for storing a computer instruction, wherein the instruction implement the steps of the method according to any one of claims 6-10 when executed by a computer or a processor.
